# EUROPÄISCHE PATENTSCHRIFT

(11) **EP 1 336 214 B1**
(45) Veröffentlichungstag und Bekanntmachung des Hinweises auf die Patenterteilung: **28.03.2007**
(21) Anmeldenummer: 01994651.6
(22) Anmeldetag: 13.11.2001
(51) Int. Cl.: H01M 8/04

(54) **BRENNSTOFFZELLENANORDNUNG**
FUEL CELL ASSEMBLY
ENSEMBLE DE PILES A COMBUSTIBLES

(30) Priorität: 15.11.2000 DE 10056536
(43) Veröffentlichungstag der Anmeldung: 20.08.2003
(73) Patentinhaber: MTU CFC Solutions GmbH, 85521 Ottobrunn (DE)
(72) Erfinder: STEINFORT, Marc, 85737 Ismaning (DE)
(74) Vertreter: Winter, Josef
(86) Internationale Anmeldenummer: PCT/EP2001/013089
(87) Internationale Veröffentlichungsnummer: WO 2002/041425

(56) Entgegenhaltungen:
- EP-A- 0 913 357
- EP-A- 0 977 294
- WO-A-97/02613
- WO-A-97/42673
- US-A- 3 843 950

## Beschreibung

Die Erfindung betrifft eine Brennstoffzellenanordnung nach dem Oberbegriff des Anspruchs 1.

Es sind Brennstoffzellenanordnungen mit in Form eines Brennstoffzellenstapels angeordneten Brennstoffzellen bekannt, wobei die Brennstoffzellen jeweils eine Anode, eine Kathode und eine dazwischen angeordnete Elektrolytmatrix enthalten. Die Brennstoffzellenanordnung ist versehen mit einem Anodeneingang zur Zuführung von frischem Brenngas zu den Anoden und mit einem Anodenausgang zum Abführen von verbrauchtem Brenngas von den Anoden, sowie mit einem Kathodeneingang zur Zuführung von frischen Kathodengas zu den Kathoden und mit einem Kathodenausgang zum Abführen von verbrauchtem Kathodengas von den Kathoden. Eine elektrische Heizeinrichtung dient zum Beheizen des Kathodeneingangsgases, etwa beim Anfahren der Brennstoffzellenanordnung.

Weiterhin sind Brennstoffzellenanordnungen dieser Art bekannt, bei denen ein oder mehrere Brennstoffzellenstapel in einem die Strömungswege von Kathodengas und Brenngas einschließenden thermisch isolierenden Schutzgehäuse angeordnet sind, und wobei der oder die Brennstoffzellenstapel und die elektrische Heizeinrichtung miteinander gekoppelt und in dem thermisch isolierenden Schutzgehäuse zusammengefasst angeordnet sind.

Weiterhin ist es bei Brennstoffzellenanordnungen der angegebenen Art bekannt, dass dem Anodenausgang der Brennstoffzellen nachgeschaltet eine katalytische Verbrennungsvorrichtung zum Nachverbrennen brennbarer Restbestandteile des die Anodenausgänge verlassenden verbrauchten Brenngases vorgesehen ist.

Die WO 97 02613 A offenbart eine Brennstoffzellen anordnung nach dem Stand der Technik.

Die Aufgabe der Erfindung ist es eine verbesserte Brennstoffzellenanordnung zu schaffen. Diese Aufgabe wird durch die im Anspruch 1 angegebene Brennstoffzellenanordnung gelöst.

Vorteilhafte Weiterbildungen der erfindungsgemäßen Brennstoffzellenanordnung sind in den Unteransprüchen gekennzeichnet.

Durch die Erfindung wird eine Brennstoffzellenanordnung mit in Form eines Brennstoffzellenstapels angeordneten Brennstoffzellen geschaffen, wobei die Brennstoffzellen jeweils eine Anode, eine Kathode und eine dazwischen angeordnete Elektrolytmatrix enthalten. Weiterhin verfügt die Brennstoffzellenanordnung über einen Anodeneingang zur Zuführung von frischem Brenngas zu den Anoden und einen Anodenausgang zum Abführen von verbrauchtem Brenngas von den Anoden. Zur Zuführung von frischem Kathodengas zu den Kathoden ist ein Kathodeneingang vorgesehen und zum Abführen von verbrauchtem Kathodengas von den Kathoden dient ein Kathodenausgang. Schließlich ist eine elektrische Heizeinrichtung zum Beheizen des Kathodeneingangsgases vorgesehen. Erfindungsgemäß ist es vorgesehen, dass die elektrische Heizeinrichtung durch eine Struktur eines elektrisch leitenden Schaummaterials gebildet ist, die von dem zu beheizenden Gas durchströmt wird und mit elektrischen Anschlüssen zum Anschluss einer Stromversorgung versehen ist.

Gemäß einer bevorzugten Ausführungsform der Erfindung besteht die Schaumstruktur der elektrischen Heizeinrichtung aus Edelstahl, vorzugsweise aus FeCrAlY, aus Stahl oder aus einer leitfähigen Keramik.

Gemäß einer besonders vorteilhaften Ausführungsform der Erfindung besteht die Heizeinrichtung aus mehreren einzelnen Segmenten, die jeweils mit elektrischen Anschlüssen versehen sind und von dem zu beheizenden Gas durchströmt werden.

Gemäß einer vorteilhaften Weiterbildung hiervon sind die Segmente der Heizeinrichtung an verschiedenen Stellen innerhalb des zu beheizenden Gasstroms angeordnet.

Gemäß einer vorteilhaften Weiterbildung hiervon weisen die Segmente der Heizeinrichtung jeweils elektrisch voneinander getrennte Anschlüsse auf, die getrennt voneinander wahlweise mit der Stromversorgung verbindbar sind.

Vorzugsweise ist die elektrische; Heizeinrichtung im Gasstrom vor dem Kathodeneingang zur Beheizung des den Kathoden der Brennstoffzellen zuzuführenden Kathodengases angeordnet.

Gemäß einer vorteilhaften Weiterbildung hiervon ist der Anodenausgang zur Zuführung von mindestens einem Teil des verbrauchten Brenngases zu den Kathoden über einen Gasführungsweg mit dem Kathodeneingang verbunden, und die elektrische Heizeinrichtung ist im Gasführungsweg nach dem Anodenausgang und vor dem Kathodeneingang angeordnet.

Dies ist vorzugsweise dadurch weitergebildet, dass im Gasführungsweg zwischen dem Anodenausgang und dem Kathodeneingang eine Mischkammer vorgesehen ist, in welcher dem den Anodenausgang verlassenden Strom des verbrauchten Brenngases vor der Zuführung zu dem Kathodeneingang Kathodengas beigemischt wird, und dass die elektrische Heizeinrichtung zusammen mit der Mischkammer in dem Gasstrom zwischen dem Anodenausgang und dem Kathodeneingang angeordnet ist.

Gemäß einer Ausführungsform der Erfindung ist die elektrische Heizeinrichtung unmittelbar vor dem Kathodeneingang angeordnet.

Gemäß einer besonders vorteilhaften Weiterbildung hiervon nimmt die Schaumstruktur der elektrischen Heizeinrichtung im wesentlichen den gesamten Querschnitt der Kathodeneingänge aller Brennstoffzellen an dem Brennstoffzellenstapel ein.

Gemäß einer alternativen Ausführungsform ist es vorgesehen, dass die elektrische Heizeinrichtung am Ausgang der Mischkammer angeordnet ist.

Gemäß einer anderen vorteilhaften Ausführungsform der Erfindung ist es vorgesehen, dass die elektrische Heizeinrichtung integral mit der Mischkammer vorgesehen ist.

Bei der letztgenannten Ausführungsform kann es vorzugsweise vorgesehen sein, dass die Schaumstruktur der elektrischen Heizeinrichtung unmittelbar am Anodenausgang angeordnet ist, im wesentlichen den gesamten Querschnitt der Anodenausgänge aller Brennstoffzellen an den Brennstoffzellenstapel einnimmt, und gleichzeitig zumindest einen Teil des Mischvolumens der Mischkammer bildet.

Vorzugsweise ist es bei der letztgenannten Ausführungsform vorgesehen, dass der die Anodenausgänge der Brennstoffzellen verlassende Gasstrom von verbrauchtem Anodengas aus einer ersten Richtung in das Mischvolumen der Mischkammer eintritt und dass der Strom des zugemischten Kathodengases aus einer zweiten Richtung in das Mischvolumen der Mischkammer eintritt und dass die gemischten Ströme von verbrauchtem Anodengas und Kathodengas das Mischvolumen der Mischkammer in einer dritten Richtung verlassen.

Gemäß einer bevorzugten Ausführungsform der erfindungsgemäßen Brennstoffzellenanordnung ist es vorgesehen, dass eines oder mehrere erste der vorher genannten einzelnen Segmente der elektrischen Heizeinrichtung im Gasstrom des der Mischkammer zugeführten Kathodengases angeordnet sind, und dass eines oder mehrere zweite der einzelnen Segmente der elektrischen Heizeinrichtung im Gasstrom des die Anodenausgänge verlassenden verbrauchten Anodengases angeordnet sind, wobei die zweiten Segmente entweder von dem Strom des verbrauchten Anodengases allein oder von dem Strom des verbrauchten Anodengases und zugemischtem Kathodengas zusammen durchströmt werden.

Gemäß einer vorteilhaften Weiterbildung der Erfindung sind die einzelnen Segmente der elektrischen Heizeinrichtung durch parallel zueinander angeordnete Platten aus dem elektrisch leitenden Schaummaterial gebildet.

Gemäß einer besonders vorteilhaften Ausführungsform der Erfindung ist es vorgesehen, dass ein oder mehrere Brennstoffzellenstapel in einem die Strömungswege von Kathodengas und Brenngas einschließenden thermisch isolierenden Gehäuse angeordnet sind, wobei der oder die Brennstoffzellenstapel und die elektrische Heizeinrichtung miteinander gekoppelt und in dem thermisch isolierenden Schutzgehäuse zusammengefasst angeordnet sind.

Gemäß einer vorteilhaften Weiterbildung der Erfindung ist es vorgesehen, dass dem Anodenausgang der Brennstoffzellen nachgeschaltet eine katalytische Verbrennungsvorrichtung zum Nachverbrennen brennbarer Restbestandteile des die Anodenausgänge verlassenden verbrauchten Brenngases vorgesehen ist.

Gemäß einem weiteren Aspekt der Erfindung ist es vorgesehen, dass die katalytische Verbrennungsvorrichtung durch eine katalytische Beschichtung auf der Schaumstruktur der elektrischen Heizeinrichtung gebildet ist.

Im folgenden werden Ausführungsbeispiele der Erfindung anhand der Zeichnung erläutert.

Es zeigen:
Figur 1 eine schematisierte perspektivische Explosionsansicht einer Brennstoffzellenanordnung mit in Form eines Stapels angeordneten Brennstoffzellen, wobei zum Zwecke der besseren Übersichtlichkeit nur einige wenige in dem Brennstoffzellenstapel enthaltene Brennstoffzellen dargestellt sind;
Figur 2 schematisiert und im größeren Maßstab eine elektrische Heizeinrichtung gemäß einem Ausführungsbeispiel der Erfindung;
Figur 3 in einer schematisierten Ansicht eine elektrische Heizeinrichtung gemäß einem weiteren Ausführungsbeispiel der Erfindung;
Figur 4 in einer schematisierten Ansicht eine elektrische Heizeinrichtung gemäß noch einem weiteren Ausführungsbeispiel der Erfindung;
Figur 5, 6 und 7 in der Draufsicht jeweils schematisierte Darstellungen von Brennstoffzellenanordnungen gemäß drei weiteren Ausführungsbeispielen der Erfindung, wobei bei jedem der Ausführungsbeispiele ein Brennstoffzellenstapel in einem thermisch isolierenden Schutzgehäuse angeordnet ist.

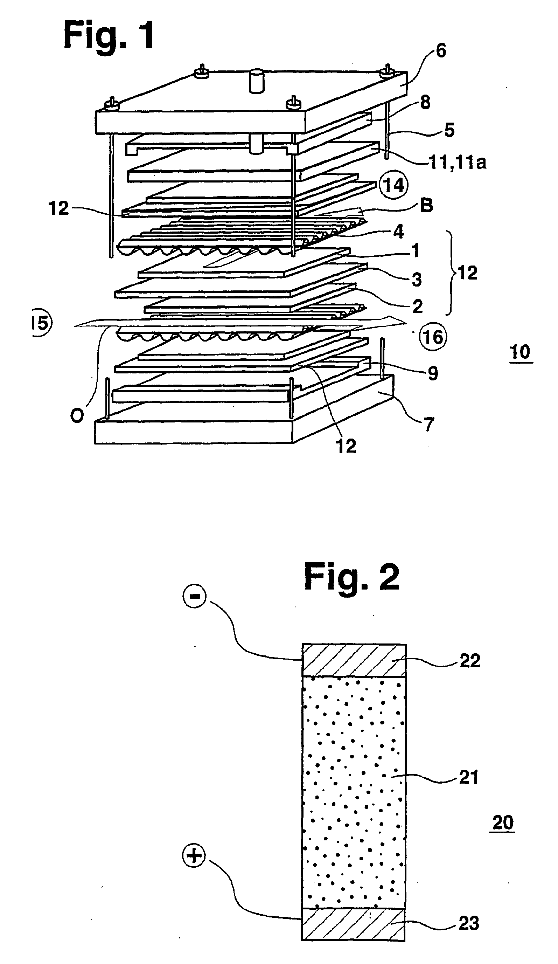

In Figur 1, die allgemein eine schematisierte perspektivische Explosionsansicht einer Brennstoffzellenanordnung zeigt, bedeutet das Bezugszeichen 10 einen Brennstoffzellenstapel, der aus einer Anzahl von Brennstoffzellen 12 besteht, die jeweils eine Anode 1, eine Kathode 2 und eine dazwischen angeordnete Elektrolytmatrix 3 enthalten. Benachbarte Brennstoffzellen 12 sind durch Bipolarplatten 4 voneinander getrennt, die dazu dienen, die Ströme eines Brenngases B und eines Kathodengases bzw. Oxidationsgases O voneinander getrennt über die Anode 1 bzw. über die Kathode 2 benachbarter Brennstoffzellen zu führen. Dabei sind die Anode 1 und die Kathode 2 benachbarter Brennstoffzellen durch die Bipolarplatten 4 gastechnisch voneinander getrennt und dabei jedoch durch die Bipolarplatten 4 bzw. durch in diesen enthaltene Stromkollektoren gleichzeitig elektrisch kontaktiert. Der Brennstoffzellenstapel 10, der eine Vielzahl solcher Brennstoffzellen 12 enthält, von denen in der Figur zum Zwecke der Übersichtlichkeit jedoch nur einige wenige dargestellt sind, ist durch Zugstangen 5, welche mit Endplatten 6, 7 an den Enden des Brennstoffzellenstapels zusammenwirken verspannt.

Den Brennstoffzellen 12 wird an einem Anodeneingang 13 frisches Brenngas zu den Anoden 1 zugeführt, an einem Anodenausgang 14 wird verbrauchtes Brenngas von den Anoden 1 abgeführt. Entsprechend wird den Brennstoffzellen 12 an einem Kathodeneingang 15 an den Kathoden 2 frisches Brenngas zugeführt und an einem Kathodenausgang 16 verbrauchtes Kathodengas von den Kathoden 2 abgeführt.

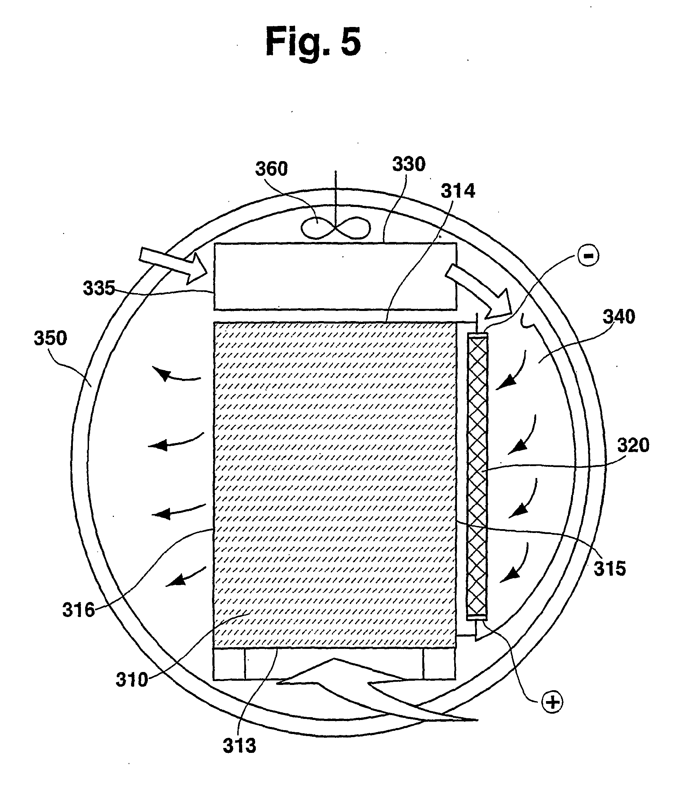

Bei den in den Figuren 5 bis 7 dargestellten Ausführungsbeispielen ist jeweils ein Brennstoffzellenstapel 310; 410; 510 in einem Schutzgehäuse 350; 450; 550 angeordnet, welches den Brennstoffzellenstapel 310; 410; 510 gegen die Umgebung thermisch isoliert und Strömungswege für Brenngas und Kathodengas einschließt bzw. definiert. Bei diesen Ausführungsbeispielen wird mittels einer Gebläseeinrichtung 360; 460; 560 ein Strom des Kathodengases innerhalb des Schutzgehäuses 350; 450; 550 umgewälzt, wobei der Kathodengasstrom, der am Kathodenausgang 316; 416; 516 aus dem Brennstoffzellenstapel 310; 410; 510 austritt und an dem Kathodeneingang 315; 415; 515 wieder in diesen eintritt, eine Beimischung des vom Anodenausgang 314; 4.14; 514 abgeführten Stroms des verbrannten Brenngases erfährt. Zugeführt wird das Brenngas dem Brennstoffzellenstapel 310; 410; 510 an einem Anodeneingang 313; 413; 513, welcher gegen das Innere des Schutzgehäuses 350; 450; 550 abgedichtet ist. Eine solche in einem thermisch isolierenden Schutzgehäuse, welche die Ströme von Brenngas und Kathodengas einschließt, untergebrachte Brennstoffzellenanordnung wird als "Hot Module" bezeichnet.

Weiterhin ist in den Figuren 5, 6 und 7 eine elektrische Heizeinrichtung 320; 420; 520 gezeigt, welche zum Beheizen des Gasstroms von Kathodengas und/oder Brenngas dient.

Figur 2 zeigt ganz allgemein eine solche elektrische Heizeinrichtung 20, welche durch eine Struktur eines elektrisch leitenden Schaummaterials gebildet ist. Ein solches Schaummaterial kann aus Edelstahl, insbesondere aus FeCrAlY, aus Stahl oder aus einer leitfähigen Keramik oder aus einem anderen geeigneten elektrisch leitenden Material bestehen. Hergestellt werden kann die Schaumstruktur durch einen Gießprozess verbunden mit einem Aufschäumen des Materials, wie es als solches im Stande der Technik bekannt ist.

Die Struktur des elektrisch leitenden Materials, welches die Heizeinrichtung 20 bildet, ist mit elektrischen Anschlüssen 22, 23 versehen, welche mit einer Stromversorgung verbindbar sind, um der elektrischen Heizeinrichtung 20 den notwendigen elektrischen Strom zuzuführen.

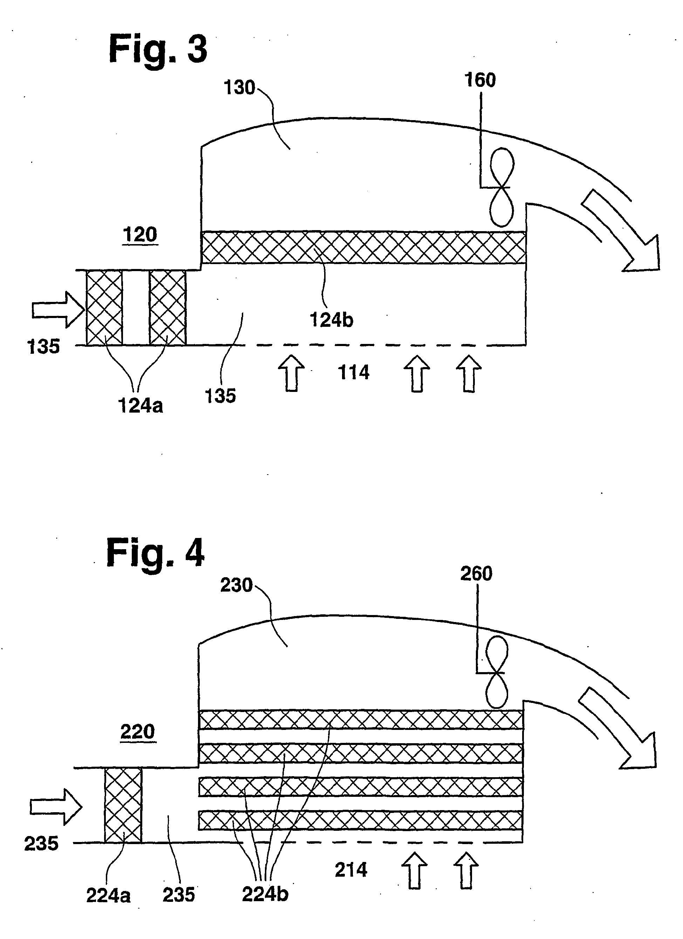

Wie die Figuren 3 und 4 zeigen, besteht bei den beiden hier abgebildeten Ausführungsbeispielen die elektrische Heizeinrichtung 120; 220 aus mehreren einzelnen Segmenten 124a, 124b; 224a, 224b, die jeweils mit elektrischen Anschlüssen (nicht eigens dargestellt) versehen sind und von dem zu beheizenden Gas, nämlich dem von einem Anodenausgang 114; 214 abgegebenen verbrauchten Brenngas sowie einem bei einem Mischeingang 135; 235 zugemischten Strom des Kathodengases durchströmt werden. Dabei sind die Segmente 124a; 224a, welche von dem Kathodengasstrom durchströmte erste Segmente bilden, von Segmenten 124b; 224b, welche von dem vom Anodenausgang 114; 214 her kommenden Strom des verbrauchten Brenngases (sowie gegebenenfalls auch von dem beigemischten Kathodengas) durchströmte zweite Segmente bilden, an verschiedenen Stellen innerhalb des zu beheizenden Gasstroms angeordnet. Wie angedeutet ist, weisen die jeweiligen Segmente 124a; 224a, 124b; 224b) jeweils elektrisch voneinander getrennte Anschlüsse auf, die getrennt voneinander wahlweise mit der Stromversorgung (nicht gezeigt) verbindbar sind.

Bei den beiden in Figur 3 und Figur 4 dargestellten Ausführungsbeispielen sind die Segmente 124a, 124b; 224a, 224b der elektrischen Heizeinrichtung 120; 220 durch Platten gebildet, die aus dem elektrisch leitenden Schaummaterial bestehen. Bei dem Ausführungsbeispiel der Figur 3 sind zwei erste Segmente 124a in Form solcher Platten parallel zueinander angeordnet, bei dem Ausführungsbeispiel von Figur 4 sind drei zweite Segmente 224b in Form von derartigen parallelen Platten angeordnet.

Bei dem in Figur 3 gezeigten Ausführungsbeispiel wird der gesamte Gasstrom bestehend aus dem von dem Anodenausgang 114 abgegebenen verbrauchten Brenngas und dem an dem Mischeingang 135 zugeführten Kathodengas durch das zweite Segment 124b geführt, bei dem in Figur 4 gezeigten Ausführungsbeispiel dagegen erfolgt eine Mischung der genannten beiden Gasströme verteilt über die Anzahl der zweiten Segmente 224b.

Wie aus den bereits vorher angesprochenen Figuren 5, 6 und 7 ersichtlich ist, ist die elektrische Heizeinrichtung 320; 420; 520 allgemein im Gasstrom vor dem Kathodeneingang 315; 415; 515 vorgesehen, um das den Kathoden der Brennstoffzellen zuzuführende Kathodengas, gemischt mit dem vom Anodenausgang 314; 414; 514 abgegebenen verbrauchten Brenngas, zu beheizen. Allgemein ist somit die elektrische Heizeinrichtung 320; 420; 520 in einem von den thermisch isolierenden Schutzgehäuse 350; 450; 550 eingeschlossenen bzw. definierten Gasführungsweg 340; 440; 540 nach dem Anodenausgang 314; 414; 514 und vor dem Kathodeneingang 315; 415; 515 angeordnet.

Weiterhin ist in dem genannten Gasführungsweg 340; 440; 540 zwischen dem Anodenausgang 314; 414; 514 und dem Kathodeneingang 315; 415; 515 eine Mischkammer 330; 430; 530 vorgesehen, in welcher dem umlaufenden Strom des Kathodengases vor der Zuführung zu dem Kathodeneingang 315; 415; 515 der den Anodenausgang 314; 414; 514 verlassende Strom des verbrauchten Brenngases beigemischt wird. Ganz allgemein ist die elektrische Heizeinrichtung 320; 420; 520 in irgendeiner Weise zusammen mit der Mischkammer 330; 430; 530 in dem Gasstrom zwischen dem Anodenausgang 314; 414; 514 und dem Kathodeneingang 315; 415; 515 angeordnet.

Bei dem in Figur 5 dargestellten Ausführungsbeispiel ist die elektrische Heizeinrichtung 320 unmittelbar vor dem Kathodeneingang 315 angeordnet, wobei die Schaumstruktur der elektrischen Heizeinrichtung 320 im wesentlichen den gesamten Querschnitt des Kathodeneingangs 315 aller Brennstoffzellen des Brennstoffzellenstapels 310 einnimmt.

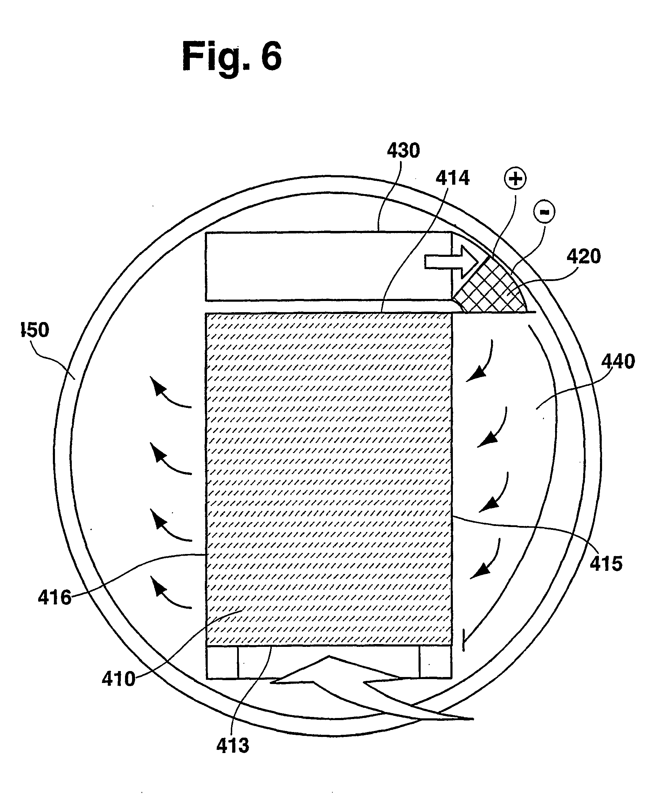

Bei dem in Figur 6 dargestellten Ausführungsbeispiel dagegen ist die elektrische Heizeinrichtung 420 dem Ausgang der Mischkammer 430 nachgeschaltet angeordnet.

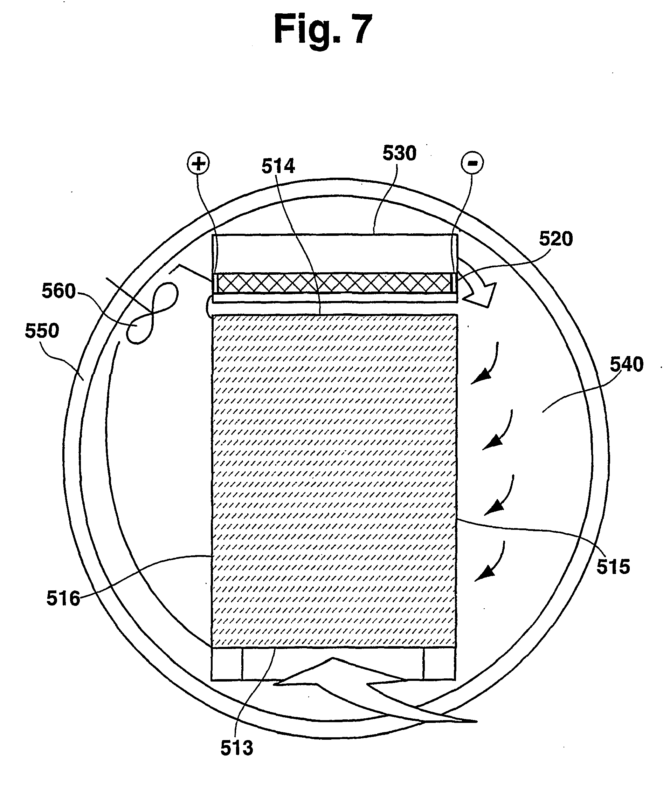

Bei dem in Figur 7 dargestellten Ausführungsbeispiel ist die elektrische Heizeinrichtung 520 integral mit der Mischkammer 530 vorgesehen, das heißt die elektrische Heizeinrichtung 520 und die Mischkammer 530 sind in Form eines gemeinsamen Bauteils kombiniert vorgesehen.

Wiederum zurückkehrend zu den Figuren 3 und 4, welche als Ausführungsformen solcher Kombinationen von Mischkammer und elektrischer Heizeinrichtung angesehen werden können, ist ersichtlich, dass die Schaumstruktur der elektrischen Heizeinrichtung, hier insgesamt mit dem Bezugszeichen 120 bzw. 220 versehen, im wesentlichen unmittelbar am Anodenausgang, hier mit dem Bezugszeichen 114, bzw. 214 versehen, angeordnet ist, im wesentlichen den gesamten Querschnitt des Anodenausgangs 114; 214 aller Brennstoffzellen des Brennstoffzellenstapels einnimmt und gleichzeitig zumindest einen Teil des Mischvolumens der Mischkammer 130; 230 bildet, nämlich in Form der zweiten Segmente 124b; 224 der elektrischen Heizeinrichtung 120; 220.

Weiterhin ist von den Figuren 3 und 4 ersichtlich, dass der die Anodenausgänge 114; 214 des Brennstoffzellenstapels verlassende Gasstrom von verbrauchtem Anodengas aus einer ersten Richtung in das Mischvolumen der Mischkammer 130; 230 eintritt, und dass der Strom des damit gemischten Kathodengases aus einer zweiten Richtung vom Mischeingang 135; 235 her in das Mischvolumen der Mischkammer 130; 230 eintritt. Die gemischten Ströme von verbrauchtem Anodengas und Kathodengas verlassen das Mischvolumen der Mischkammer 130; 230 in einer dritten Richtung, um von dort dem Kathodeneingang (nicht dargestellt) der Brennstoffzellenanordnung zugeführt zu werden.

Durch eine katalytische Beschichtung auf der Schaumstruktur der elektrischen Heizeinrichtung 120; 220; 320; 420; 520 ist eine katalytische Verbrennungsvorrichtung gebildet, durch welche ein Nachverbrennen brennbarer Restbestandteile des den Anodenausgang 114; 214; 314; 414; 514 verlassenden verbrauchten Brenngases erfolgt. Bei den in den Figuren 3 und 4 dargestellten Ausführungsbeispielen der elektrischen Heizeinrichtung 120; 220 braucht eine solche katalytische Beschichtung nur auf den von dem verbrauchten Brenngas durchströmten zweiten Segmenten 124b bzw. 224b vorgesehen sein, nicht jedoch auf den ersten Segmenten 124a; 224a, welche nur von dem umlaufenden Strom des Kathodengases, nicht jedoch vom Anodengas durchströmt werden.

Die solchermaßen mit einer katalytischen Beschichtung versehene elektrische Heizeinrichtung fungiert somit sowohl als elektrische Heizeinrichtung zum Anfahren der Brennstoffzellenanordnung wie auch als katalytische Verbrennungsvorrichtung zum Nachverbrennen der anodenseitigen Abgase und fungiert weiterhin als statischer Mischer zum Vermischen der Ströme von Anodenabgas und Kathodengas.

### Bezugszeichenliste

- 1: Anode
- 2: Kathode
- 3: Elektrolytmatrix
- 4: Bipolarplatte
- 5: Zugstange
- 6: Endplatte
- 7: Endplatte
- 8: Isolationsplatte
- 9: Isolationsplatte
- 10; 110; 210; 310; 410; 510: Brennstoffzellenstapel
- 12: Brennstoffzelle
- 13; 313; 413; 513: Anodeneingang
- 14; 114; 214; 314; 414; 514: Anodenausgang
- 15; 315; 415; 515: Kathodeneingang
- 16; 316; 416; 516: Kathodenausgang
- 20; 120; 220; 320; 420; 520: elektrische Heizeinrichtung
- 21: Schaumstruktur
- 22: elektrischer Anschluss
- 23: elektrischer Anschluss
- 124a; 224a: Segment (erstes)
- 224b; 224b: Segment (zweites)
- 130; 230; 330; 430; 530: Mischkammer
- 135; 235; 335; 435; 535: Mischeingang
- 340; 440; 540: Gasführungsweg
- 350; 450; 550: Schutzgehäuse
- 360; 460; 560: Gehäuseeinrichtung

- B: Brenngas
- O: Kathodengas

## Patentansprüche

1. Brennstoffzellenanordnung mit in Form eines Brennstoffzellenstapels (10; 110; 210; 310; 410; 510) angeordneten Brennstoffzellen (12), die jeweils eine Anode (1), eine Kathode (2) und eine dazwischen angeordnete Elektrolytmatrix (3) enthalten, mit einem Anodeneingang (13; 313; 413; 513) zur Zuführung von frischem Brenngas zu den Anoden (1) und einem Anodenausgang (14; 114; 214; 314; 414; 514) zum Abführen von verbrauchtem Brenngas von den Anoden (1), mit einem Kathodeneingang (15; 315; 415; 515) zur Zuführung von frischem Kathodengas zu den Kathoden (2) und einem Kathodenausgang (16; 316; 416; 516) zum Abführen von verbrauchtem Kathodengas von den Kathoden (2), sowie mit einer elektrischen Heizeinrichtung (20; 120; 220; 320; 420; 520) zum Beheizen des Kathodeneingangsgases, **dadurch gekennzeichnet, dass** die elektrische Heizeinrichtung (20; 120; 220; 320; 420; 520) durch eine Struktur eines elektrisch leitenden Schaummaterials gebildet ist, die von dem zu beheizenden Gas durchströmt wird und mit elektrischen Anschlüssen (22, 23) zum Anschluss einer Stromversorgung versehen ist, dass der Anodenausgang (314; 414; 514) zur Zuführung von mindestens einem Teil des verbrauchten Brenngases zu den Kathoden (2) der Brennstoffzellen (12) über einen Gasführungsweg (340; 440; 540) mit dem Kathodeneingang (315; 415; 515) verbunden ist, dass die elektrische Heizeinrichtung (20; 120; 220; 320; 420; 5.20) im Gasführungsweg (340; 440; 540) nach dem Anodenausgang (314; 414; 514) und vor dem Kathodeneingang (315; 415; 515) angeordnet ist, und dass die elektrische Heizeinrichtung (20; 120; 220; 320; 420; 520) durch eine katalytische Beschichtung auf der Schaumstruktur zur katalytischen Verbrennung brennbarer Bestandteile des Anodenabgases versehen ist.

2. Brennstoffzellenanordnung nach Anspruch 1, **dadurch gekennzeichnet, dass** die Schaumstruktur der elektrischen Heizeinrichtung (20; 120; 220; 320; 420; 520) aus Edelstahl, vorzugsweise FeCrAlY, aus Stahl oder aus einer leitfähigen Keramik besteht.

3. Brennstoffzellenanordnung nach Anspruch 1 oder 2, **dadurch gekennzeichnet, dass** die elektrische Heizeinrichtung (20; 120; 220; 320; 420; 520) aus mehreren einzelnen Segmenten (124a, 124b; 224a, 224b) besteht, die jeweils mit elektrischen Anschlüssen (22, 23) versehen sind und von dem zu beheizenden Gas durchströmt werden.

4. Brennstoffzellenanordnung nach Anspruch 3, **dadurch gekennzeichnet, dass** die Segmente (124a, 124b; 224a, 224b) der elektrischen Heizeinrichtung (20; 120; 220; 320; 420; 520) an verschiedenen Stellen innerhalb des zu beheizenden Gasstroms angeordnet sind.

5. Brennstoffizellenanordnung nach Anspruch 3 oder 4, **dadurch gekennzeichnet, dass** die Segmente (124a, 124b; 224a, 224b) der elektrischen Heizeinrichtung (20; 120; 220; 320; 420; 520) jeweils elektrisch voneinander getrennter Anschlüsse (22, 23) aufweisen, die getrennt voneinander wahlweise mit der Stromversorgung verbindbar sind.

6. Brennstoffzellenanordnung nach einem der Ansprüche 1 bis 5, **dadurch gekennzeichnet, dass** im Gasführungsweg (340; 440; 540) zwischen dem Anodenausgang (314; 414; 514) und dem Kathodeneingang (315; 415; 515) eine Mischkammer (330; 430; 530) vorgesehen ist, in welcher dem den Anodenausgang (314; 414; 514) verlassenden Strom des verbrauchten Brenngases vor der Zuführung zu dem Kathodeneingang (315; 415; 515) Kathodengas beigemischt wird, und dass die elektrische Heizeinrichtung (320; 420; 520) zusammen mit der Mischkammer (330; 430; 530) in dem Gasstrom zwischen den Anodenausgang (314; 414; 514) und dem Kathodeneingang (315; 415; 515) angeordnet ist.

7. Brennstoffzellenanordnung nach einem der Ansprüche 1 bis 6, **dadurch gekennzeichnet, dass** die elektrische Heizeinrichtung (320) unmittelbar vor dem Kathodeneingang (315) angeordnet ist.

8. Brennstoffzellenanordnung nach Anspruch 7, **dadurch gekennzeichnet, dass** die Schaumstruktur der elektrischen Heizeinrichtung (320) im wesentlichen den gesamten Querschnitt der Kathodeneingänge (315) aller Brennstoffzellen (12) an dem Brennstoffzellenstapel (310) einnimmt.

9. Brennstoffzellenanordnung nach Anspruch 6, **dadurch gekennzeichnet, dass** die elektrische Heizeinrichtung (420) am Ausgang der Mischkammer (430) angeordnet ist.

10. Brennstoffzellenanordnung nach Anspruch 6, **dadurch gekennzeichnet, dass** die elektrische Heizeinrichtung (520) integral mit der Mischkammer (530) vorgesehen ist.

11. Brennstoffzellenanordnung nach Anspruch 10, **dadurch gekennzeichnet, dass** die Schaumstruktur der elektrischen Heizeinrichtung (120; 220; 520) unmittelbar am Anodenausgang (114; 214; 514) angeordnet ist, im wesentlichen den gesamten Querschnitt der Anodenausgänge (114; 214; 514) aller Brennstoffzellen des Brennstoffzellenstapels einnimmt, und gleichzeitig zumindest einen Teil des Mischvolumens der Mischkammer (130; 230; 530) bildet.

12. Brennstoffzellenanordnung nach Anspruch 11, **dadurch gekennzeichnet, dass** der die Anodenausgänge (114; 214; 514) der Brennstoffzellen verlassende Gasstrom von verbrauchtem Anodengas aus einer ersten Richtung in das Mischvolumen der Mischkammer (130; 230; 530) eintritt, und dass der Strom des zugemischten Kathodengases aus einer zweiten Richtung in das Mischvolumen der Mischkammer (130; 230; 530) eintritt, und dass die gemischten Ströme von verbrauchtem Anodengas und Kathodengas das Mischvolumen der Mischkammer (130; 230; 530) in einer dritten Richtung verlassen.

13. Brennstoffzellenanordnung nach Anspruch 10, 11 oder 12 in Verbindung mit Anspruch 3, 4 oder 5, **dadurch gekennzeichnet, dass** eines oder mehrere erste der einzelnen Segmente (124a; 224a) der elektrischen Heizeinrichtung (120; 220) im Gasstrom des der Mischkammer (130; 230) zugeführten Kathodengases angeordnet sind, und dass eines oder mehrere zweite der einzelnen Segmente (124b; 224b) der elektrischen Heizeinrichtung (120; 220) im Gasstrom des die Anodenausgänge (114; 214) verlassenden verbrauchten Anodengases angeordnet sind, wobei die zweiten Segmente (124b; 224b) entweder von dem Strom des verbrauchten Anodengases allein oder von dem Strom des verbrauchten Anodengases und dem zugemischten Kathodengas durchströmt werden.

14. Brennstoffzellenanordnung nach einem der Ansprüche 1 bis 13, **dadurch gekennzeichnet, dass** die einzelnen Segmente (124a, 124b; 224a, 224b) der elektrischen Heizeinrichtung (120; 220) durch parallel zueinander angeordnete Platten aus dem elektrisch leitenden Schaummaterial gebildet sind.

15. Brennstoffzellenanordnung nach einem der Ansprüche 1 bis 14, **dadurch gekennzeichnet, dass** ein oder mehrere Brennstoffzellenstapel (310; 410; 510) in einem die Strömungswege von Kathodengas und Brenngas einschließenden thermisch isolierenden Schutzgehäuse (350; 450; 550) angeordnet sind, und dass der oder die Brennstoffzellenstapel. (310; 410; 510) und die elektrische Heizeinrichtung (320; 420; 520) miteinander gekoppelt und in dem thermisch isolierenden Schutzgehäuse (350; 450; 550) zusammengefasst angeordnet sind.

## Claims

1. Fuel cell arrangement having fuel cells (12) which are arranged in the form of a fuel cell stack (10; 110; 210; 310; 410; 510) and each contain an anode (1), a cathode (2) and an electrolyte matrix (3) arranged between them, having an anode input (13; 313; 413; 513) for supplying fresh fuel gas to the anodes (1), and having an anode output (14; 114; 214; 314; 414; 514) for carrying consumed fuel gas away from the anodes (1), having a cathode input (15; 315; 415; 515) for supplying fresh cathode gas to the cathodes (2), and having a cathode output (16; 316; 416; 516) for carrying consumed cathode gas away from the cathodes (2), and having an electrical heating device (20; 120; 220; 320; 420; 520) for heating the cathode input gas, **characterized in that** the electrical heating device (20; 120; 220; 320; 420; 520) is formed by a structure of an electrically conductive foam material through which the gas to be heated flows and which is provided with electrical connections (22, 23) for connection of an electrical power supply, **in that** the anode output (314; 414; 514) is connected via a gas guide path (340; 440; 540) to the cathode input (315; 415; 515) in order to supply at least a portion of the consumed fuel gas to the cathodes (2), **in that** the electrical heating device (20; 120; 220; 320; 420; 520) is arranged in the gas guide path (340; 440; 540) downstream from the anode output (314; 414; 514) and upstream of the cathode input (315; 415; 515), and **in that** the electrical heating device (20; 120; 220; 320; 420; 520) has a catalytic coating on the foam structure for catalytic combustion of combustible components of the anode exhaust gas.

2. Fuel cell arrangement according to Claim 1, **characterized in that** the foam structure of the electrical heating device (20; 120; 220; 320; 420; 520) is composed of stainless steel, preferably FeCrAlY, of steel or of a conductive ceramic.

3. Fuel cell arrangement according to Claim 1 or 2, **characterized in that** the electrical heating device (20; 120; 220; 320; 420; 520) comprises a plurality of individual segments (124a, 124b; 224a, 224b) which are each provided with electrical connections (22, 23) and through which the gas to be heated flows.

4. Fuel cell arrangement according to Claim 3, **characterized in that** the segments (124a, 124b; 224a, 224b) of the electrical heating device (20; 120; 220; 320; 420; 520) are arranged at different points within the gas flow to be heated.

5. Fuel cell arrangement according to Claim 3 or 4, **characterized in that** the segments (124a, 124b; 224a, 224b) of the electrical heating device (20; 120; 220; 320; 420; 520) each have connections (22, 23) which are electrically isolated from one another and can be selectively connected to the electrical power supply, separately from one another.

6. Fuel cell arrangement according to one of Claims 1 to 5, **characterized in that** a mixing chamber (330; 430; 530) is provided in the gas guide path (340; 440; 540) between the anode output (314; 414; 514) and the cathode input (315; 415; 515), in which mixing chamber (330; 430; 530) cathode gas is mixed with the flow of the consumed fuel gas leaving the anode output (314; 414; 514) before being supplied to the cathode input (315; 415; 515), and **in that** the electrical heating device (320; 420; 520) is arranged together with the mixing chamber (330; 430; 530) in the gas flow between the anode output (314; 414; 514) and the cathode input (315; 415; 515).

7. Fuel cell arrangement according to one of Claims 1 to 6, **characterized in that** the electrical heating device (320) is arranged immediately upstream of the cathode input (315).

8. Fuel cell arrangement according to Claim 7, **characterized in that** the foam structure of the electrical heating device (320) occupies essentially the entire cross section of the cathode inputs (315) of all the fuel cells (12) in the fuel cell stack (310).

9. Fuel cell arrangement according to Claim 6, **characterized in that** the electrical heating device (420) is arranged at the output of the mixing chamber (430).

10. Fuel cell arrangement according to Claim 6, **characterized in that** the electrical heating device (520) is provided integrally with the mixing chamber (530).

11. Fuel cell arrangement according to Claim 10, **characterized in that** the foam structure of the electrical heating device (120; 220; 520) is arranged directly at the anode output (114; 214; 514), occupies essentially the entire cross section of the anode outputs (114; 214; 514) of all the fuel cells in the fuel cell stack, and at the same time forms at least a part of the mixing volume of the mixing chamber (130; 230; 530).

12. Fuel cell arrangement according to Claim 11, **characterized in that** the gas flow of consumed anode gas leaving the anode outputs (114; 214; 514) of the fuel cells enters the mixing volume of the mixing chamber (130; 230; 530) from a first direction, and **in that** the flow of the added cathode gas enters the mixing volume of the mixing chamber (130; 230; 530) from a second direction, and **in that** the mixed flows of consumed anode gas and cathode gas leave the mixing volume of the mixing chamber (130; 230; 530) in a third direction.

13. Fuel cell arrangement according to Claim 10, 11 or 12 in conjunction with Claim 3, 4 or 5, **characterized in that** one or more first of the individual segments (124a; 224a) of the electrical heating device (120; 220) is or are arranged in the gas flow of the cathode gas which is supplied to the mixing chamber (130; 230), and **in that** one or more second of the individual segments (124b; 224b) of the electrical heating device (120; 220) is or are arranged in the gas flow of the consumed anode gas leaving the anode outputs (114; 214), in which case either the flow of the consumed anode gas on its own or the flow of the consumed anode gas and of the added cathode gas flows through the second segments (124b; 224b).

14. Fuel cell arrangement according to one of Claims 1 to 13, **characterized in that** the individual segments (124a, 124b; 224a, 224b) of the electrical heating device (120; 220) are formed by plates, which are arranged parallel to one another and are composed of the electrically conductive foam material.

15. Fuel cell arrangement according to one of Claims 1 to 14, **characterized in that** one or more fuel cell stacks (310; 410; 510) is or are arranged in a thermally insulating protective housing (350; 450; 550), which encloses the flow paths of cathode gas and fuel gas, and **in that** the fuel cell stack or stacks (310; 410; 510) and the electrical heating device (320; 420; 520) are coupled to one another and are arranged combined in the thermally insulating protective housing (350; 450; 550).

## Revendications

1. Ensemble de piles à combustible, constitué de piles à combustible (12), organisées sous la forme d'un empilement de piles à combustible (10; 110; 210; 310; 410; 510), qui contiennent chacune une anode (1), une cathode (2) et une matrice électrolytique (3) disposée entre l'anode et la cathode, d'une entrée d'anode (13; 313; 413; 513) pour l'introduction de gaz combustible frais aux anodes (1) et d'une sortie d'anode (14; 114; 214; 314; 414; 514) pour l'évacuation de gaz combustible consommé hors des anodes (1), d'une entrée de cathode (15; 315; 415; 515) pour l'introduction de gaz de cathode frais aux cathodes (2) et d'une sortie de cathode (16; 316; 416; 516) pour l'évacuation de gaz de cathode consommé hors des cathodes (2), ainsi que d'un dispositif de chauffage électrique (20; 120; 220; 320; 420; 520) pour chauffer le gaz d'entrée de cathode, **caractérisé en ce que** le dispositif de chauffage électrique (20; 120; 220; 320; 420; 520) est formé d'une structure en matériau alvéolaire électriquement conducteur, qui est traversée par le gaz à chauffer et est pourvue de raccords électriques (22, 23) pour le raccordement d'une alimentation en courant électrique, **en ce que** la sortie d'anode (314; 414; 514) est raccordée à l'entrée de cathode (315; 415; 515) pour amener au moins une partie du gaz combustible consommé jusqu'aux cathodes (2) des piles à combustible (12) par un chemin d'amenée de gaz (340; 440; 540), **en ce que** le dispositif de chauffage électrique (20; 120; 220; 320; 420; 520) est disposé dans le chemin d'amenée de gaz (340; 440; 540), après la sortie d'anode (314; 414; 514) et avant l'entrée de cathode (315; 415; 515), et **en ce que** le dispositif de chauffage électrique (20; 120; 220; 320; 420; 520) est pourvu d'un revêtement catalytique sur la structure alvéolaire pour la combustion catalytique de composants combustibles de l'effluent gazeux d'anode.

2. Ensemble de piles à combustible selon la revendication 1, **caractérisé en ce que** la structure alvéolaire du dispositif de chauffage électrique (20; 120; 220; 320; 420; 520) est composée d'acier inoxydable, de préférence de FeCrAlY, d'acier ou d'une céramique conductrice.

3. Ensemble de piles à combustible selon la revendication 1 ou 2, **caractérisé en ce que** le dispositif de chauffage électrique (20; 120; 220; 320; 420; 520) est composé de plusieurs segments individuels (124a, 124b; 224a, 224b), qui sont pourvus chacun de raccords électriques (22, 23) et sont traversés par le gaz à chauffer.

4. Ensemble de piles à combustible selon la revendication 3, **caractérisé en ce que** les segments (124a, 124b; 224a, 224b) du dispositif de chauffage électrique (20; 120; 220; 320; 420; 520) sont disposés à différents endroits à l'intérieur du flux de gaz à chauffer.

5. Ensemble de piles à combustible selon la revendication 3 ou 4, **caractérisé en ce que** les segments (124a, 124b; 224a, 224b) du dispositif de chauffage électrique (20; 120; 220; 320; 420; 520) présentent chacun des raccords électriquement indépendants les uns des autres (22, 23), qui peuvent être raccordés à l'alimentation en courant électrique, au choix, indépendamment les uns des autres.

6. Ensemble de piles à combustible selon l'une quelconque des revendications 1 à 5, **caractérisé en ce que**, dans le chemin d'amenée de gaz (340; 440; 540) entre la sortie d'anode (314; 414; 514) et l'entrée de cathode (315; 415; 515), une chambre de mélange (330; 430; 530) est prévue, dans laquelle du gaz de cathode est ajouté au flux du gaz combustible consommé quittant la sortie d'anode (314; 414; 514) avant son introduction dans l'entrée de cathode (315; 415; 515), et **en ce que** le dispositif de chauffage électrique (320; 420; 520) est disposé, conjointement avec la chambre de mélange (330; 430; 530), dans le flux de gaz entre la sortie d'anode (314; 414; 514) et l'entrée de cathode (315; 415; 515).

7. Ensemble de piles à combustible selon l'une quelconque des revendications 1 à 6, **caractérisé en ce que** le dispositif de chauffage électrique (320) est disposé immédiatement avant l'entrée de cathode (315).

8. Ensemble de piles à combustible selon la revendication 7, **caractérisé en ce que** la structure alvéolaire du dispositif de chauffage électrique (320) occupe essentiellement toute la section transversale des entrées de cathodes (315) de toutes les piles à combustible (12) de l'empilement de piles à combustible (310).

9. Ensemble de piles à combustible selon la revendication 6, **caractérisé en ce que** le dispositif de chauffage électrique (420) est disposé à la sortie de la chambre de mélange (430).

10. Ensemble de piles à combustible selon la revendication 6, **caractérisé en ce que** le dispositif de chauffage électrique (520) est prévu intégralement intégré avec la chambre de mélange (530).

11. Ensemble de piles à combustible selon la revendication 10, **caractérisé en ce que** la structure alvéolaire du dispositif de chauffage électrique (120; 220; 520) est disposée immédiatement à la sortie d'anode (114; 214; 514), occupe essentiellement toute la section transversale des sorties d'anodes (114; 214; 514) de toutes les piles à combustible de l'empilement de piles à combustible, et, en même temps, forme au moins une partie du volume de mélange de la chambre de mélange (130; 230; 530).

12. Ensemble de piles à combustible selon la revendication 11, **caractérisé en ce que** le flux de gaz d'anode consommé, quittant les sorties d'anodes (114; 214; 514) des piles à combustible, entre dans le volume de mélange de la chambre de mélange (130; 230; 530) en provenance d'une première direction, et **en ce que** le flux du gaz de cathode, qui y est mélangé, entre dans le volume de mélange de la chambre de mélange (130; 230; 530) à partir d'une deuxième direction, et **en ce que** les flux mélangés de gaz d'anode consommé et de gaz de cathode quittent le volume de mélange de la chambre de mélange (130; 230; 530) dans une troisième direction.

13. Ensemble de piles à combustible selon la revendication 10, 11 ou 12 en liaison avec la revendication 3, 4 ou 5, **caractérisé en ce qu'**un ou plusieurs premier(s) segment(s) parmi les segments individuels (124a; 224a) du dispositif de chauffage électrique (120; 220) est (sont) disposé(s) dans le flux du gaz de cathode introduit dans la chambre de mélange (130; 230), et **en ce qu'**un ou plusieurs second(s) segment(s) parmi les segments individuels (124b; 224b) du dispositif de chauffage électrique (120; 220) est (sont) disposé(s) dans le flux du gaz d'anode consommé quittant les sorties d'anodes (114; 214), les seconds segments (124b; 224b) étant traversés soit par le flux du gaz d'anode consommé seul, soit par le flux du gaz d'anode consommé et du gaz de cathode qui y a été mélangé.

14. Ensemble de piles à combustible selon l'une quelconque des revendications 1 à 13, **caractérisé en ce que** les segments individuels (124a, 124b; 224a, 224b) du dispositif de chauffage électrique (120; 220) sont formés de plaques, disposées parallèlement les unes aux autres, réalisées dans le matériau alvéolaire électriquement conducteur.

15. Ensemble de piles à combustible selon l'une quelconque des revendications 1 à 14, **caractérisé en ce qu'**un ou plusieurs empilement(s) de piles à combustible (310; 410; 510) est (sont) disposé(s) dans une enceinte de protection (350; 450; 550) renfermant et isolant thermiquement les chemins de flux de gaz de cathode et de gaz combustible, et **en ce que** l'empilement ou les empilements de piles à combustible (310; 410; 510) et le dispositif de chauffage électrique (320; 420; 520) sont couplés entre eux et sont disposés groupés dans l'enceinte de protection thermiquement isolante (350; 450; 550).
